(19) Europäisches Patentamt
European Patent Office
Office européen des brevets

(11) **EP 2 141 056 B1**

(12) **EUROPEAN PATENT SPECIFICATION**

(45) Date of publication and mention
of the grant of the patent:
**29.07.2015 Bulletin 2015/31**

(51) Int Cl.:
*B60K 6/48 (2007.10)*          *B60W 10/02 (2006.01)*
*B60W 10/06 (2006.01)*          *B60W 10/08 (2006.01)*
*B60W 10/11 (2012.01)*          *B60W 20/00 (2006.01)*

(21) Application number: **09164209.0**

(22) Date of filing: **30.06.2009**

(54) **A hybrid power system and its controlling method**

Hybridantriebssystem und dessen Steuerungsverfahren

Système d'entrainement hybride et son procédé de contrôle

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **30.06.2008 CN 200810129196**

(43) Date of publication of application:
**06.01.2010 Bulletin 2010/01**

(73) Proprietor: **Byd Company Limited
Guangdong 518118 (CN)**

(72) Inventor: **Tang, Xiaohua
Shenzhen, Guangdong 518118 (CN)**

(74) Representative: **Gulde & Partner
Patent- und Rechtsanwaltskanzlei mbB
Wallstraße 58/59
10179 Berlin (DE)**

(56) References cited:
**WO-A-99/21263          US-A- 5 343 970
US-A- 6 022 290          US-A- 6 116 363
US-B1- 6 428 444**

## Description

## Cross-Reference to Related Applications

This patent application claims the priority of the Chinese Patent Application No. 2008-10129196.9, filed on June 30, 2008, the contents of which are incorporated herein by reference in their entirety.

## FIELD OF TECHNOLOGY

The present patent application relates to a hybrid power system and a controlling method thereof.

## BACKGROUND OF THE INVENTION

Conventional hybrid power systems generally comprise an engine, a clutch, an electric motor and an energy storage device such as a battery.

In the sense of the present invention, an electric motor is understood is a device using electrical energy to produce mechanical energy, preferably always by the interaction of magnetic fields and current-carrying conductors. The reverse process, that of using mechanical energy to produce electrical energy, may also be accomplished by a the motor which then acts as a generator or dynamo. Preferably the motor according to the present invention (also called traction motor) perform both tasks, and is preferably used on vehicles.

Further, in the sense of the present invention, a(n) (internal combustion) engine is an engine in which the combustion of a fuel occurs with an oxidiser (usually air) in a combustion chamber. In an internal combustion engine the expansion of the high temperature and pressure gases, that are produced by the combustion, directly apply force to a movable component of the engine, such as the pistons or turbine blades and by moving it over a distance, generate useful mechanical energy.

Further, in the sense of the present invention, an energy storage device is a device that stores some form of energy that can be drawn upon at a later time to perform some useful operation. A device that stores energy is sometimes called an accumulator. energy storage device may comprise one unit or a plurality of sub-units such as a plurality of battery cells.

Further, in the sense of the present invention, the state of charge value (SOC) represents a percentage which is calculated by the current state of charge of an energy storage device divided by the maximum state of charge of the energy storage device. In other words, the state of charge value represents the ratio of the current charge capacity and the maximum charge capacity of the energy storage device.

U.S. document 6428444, which is regarded as the closest prior art and discloses the preamble of the independent claim 1, discloses a hybrid power system having a plurality of power sources and a method for operating the hybrid power system according to an electric-only power mode or a parallel mode.

In conventional hybrid power systems, the electric motor is connected to the energy storage device; the engine is connected with an input shaft of a transmission via the clutch; an input shaft of the transmission is connected with an output shaft of the motor; and therefore the power of the engine and the electric motor is output through the output shaft of the transmission. Therefore the power supplied from the hybrid power system to a load (or a user) such as a wheel will be interrupted for a while when shifting up or shifting down the transmission ratio in the conventional hybrid power system, which will affect the power continuity of the hybrid power system.

A further disadvantage of conventional hybrid power systems is that fuel consumption is increased due to the fact that the engine is cannot utilized with the highest possible degree of efficiency during operation due to a varying power demand.

## SUMMARY OF CERTAIN ASPECTS OF THE INVENTION

According to an aspect of the invention, a method for controlling a hybrid power system is disclosed, wherein the hybrid power system comprises: an engine; a clutch; a transmission; a motor; and an energy storage device. The motor is connected to the energy storage device, the engine is connected to the input shaft of the transmission via the clutch; and the output shaft of the transmission is operatively coupled with the output shaft of the motor to provide a coupled power output. The output shaft of the transmission can be directly connected with the output shaft of the motor using a spline connection, but is not limited therero.

In more particular, the rotational speed output power of the engine, and the output power of the motor are both assigned according to the rotational speed of the crank shaft of the engine. In the sense of the present invention, the electric-only power mode is understood as a mode of operation of the hybrid power system system in which only power from the electric motor contributes to the power which is output to a user.

The parallel mode is understood as a mode of operation of the hybrid power system in which both, power from the electric motor and power from the engine contribute to the power which is output to a user.

In this hybrid power system, the output shaft of the transmission is connected with the output shaft of the motor, if no power outputs when shifting, the power may be output by the motor, which let the power of the hybrid power system to be continuous and no power interruption.

The method for controlling the hybrid power system comprises the following steps: setting a work mode based on a current vehicle velocity and a electric quantity of the energy storage device, wherein the work mode is set as an electric-only power mode or a parallel mode; if the work mode is set to the electric-only power mode, then assigning a power level such that an output power of the motor is based on the power demanded, and wherein the output power of the engine is 0; and if the work mode is set to the parallel mode, then assigning a power level such that an output power of the engine and an output power of the motor are both assigned based on a rotational speed of the engine.

Preferably in the parallel mode, the step of assigning power includes: configuring a demand power based on a maximum output power of the hybrid power system and a current depth of the accelerator pedal; configuring an optimal output power of the engine based on a rotational speed of the engine; controlling an output power of the engine to be the optimal output power; and controlling the output power of the motor to be the difference of the demand power and the optimal output power of the engine. Preferably the step of configuring the optimal output power of the engine includes the steps of: checking a rational speed of the engine; and determining an optimal output power that corresponds to the rational speed according to a rational speed- power contrast table of the engine.

Preferably the steps of setting the work mode comprise the steps of: determining if the work mode is set for a first time; if the work mode is being set for a first time, then set the work mode to the electric-only mode; if the work mode is not being set for a first time, than compare a current vehicle velocity with a predetermined vehicle velocity; if the current vehicle velocity is less than the predetermined vehicle velocity, then the work mode is set to the electric-only mode; and if the current vehicle velocity is equal to or greater than the predetermined vehicle velocity, then the work mode is set to the electric-only mode or the parallel mode according to a storage value (SOC) of the energy storage device.

Preferably the predetermined vehicle velocity is a velocity when the engine works in a lowest rational speed. Preferably the energy storage device has a discharge lower limit (SOC1) and an upper charge limit (SOC2), wherein 0% < SOC1 < SOC2 < 100%; if the current vehicle velocity is greater than the predetermined vehicle velocity, then: the work mode is set to the parallel mode if $SOC \leq SOC1$; the work mode is set to the electric-only mode if $SOC \geq SOC2$; and the work mode is set to a previously set mode if SOC1 < SOC < SOC2.

Preferably the method further includes a shifting process comprising the steps of decreasing an input power of the engine and increasing an output power of the motor so that a sum of output power of the engine and the motor remains unchanged; disengaging the clutch and shifting a transmission to a new gear level when the output power of the engine is reduced to 0; after shifting the transmission, adjusting the rotational speed of the engine based on the new gear level, and engaging the clutch; and after engaging the clutch, configuring an output power of the engine to an optimal output power corresponding to a rotational speed of the engine.

Preferably a controller is provided for the engine which communicates with a controller that is provided for the motor. Alternatively, it is also possible that one controller is provided which is adapted to control both, the engine and the motor. Preferably, during a shifting process, the controller of the engine sends a message containing the current amount of output power of the engine to the controller of the motor by a communication system, and the controller of the motor receives said message, then, the controller of the motor adapts the output power of the motor according to the whole power that the vehicle requires in order to keep the sum of the output power of the motor and the engine equal, i.e. unchanged according to the vehicle power demand. The communication speed is commonly preferred to less than 10ms. In present system, it is preferred to be less than 8ms, namely, the controller of the motor can receive the message (the output power of the engine) every 8ms (or less) and adapt the output power of the motor every 0.1ms (or less). That is, every time the output power of the engine is received, the controller of the motor will adapt its output power 80 (or more) times to provide the demanded output power. In case of a common controller adapted to control the engine and the motor, it is preferred that the controller determines the current amount of output power of the engine very 10 ms or less (preferably every 8 ms or less) and the controller then adapts the output power of the motor every 0.1ms (or less) such that the sum of output power of the engine and the motor remains unchanged.

Preferably configuring the engine to the optimal output power comprises the steps of: determining a rotational speed of the engine; and determining an optimal output power that corresponds to the rational speed according to a rational speed- power contrast table of the engine.

## BRIEF DESCRIPTION OF THE DRAWINGS

Figure 1 is a schematic view of a conventional hybrid power system;

Figure 2 is a schematic view of a hybrid power system according to an embodiment of the present invention;

Figure 3A shows a flow chart of a preferred embodiment of the hybrid power system controlling method according to the present invention;

Figure 3B shows a flow chart of another preferred embodiment of the hybrid power system controlling method according to the present invention;

Figure 4 shows a diagram illustrating the relation between the work mode, the current vehicle velocity and SOC (State Of Charge) of the energy storage device of the hybrid power system according to the present invention.

## DETAILED DESCRIPTION OF THE PREFERRED EMBODIMENTS

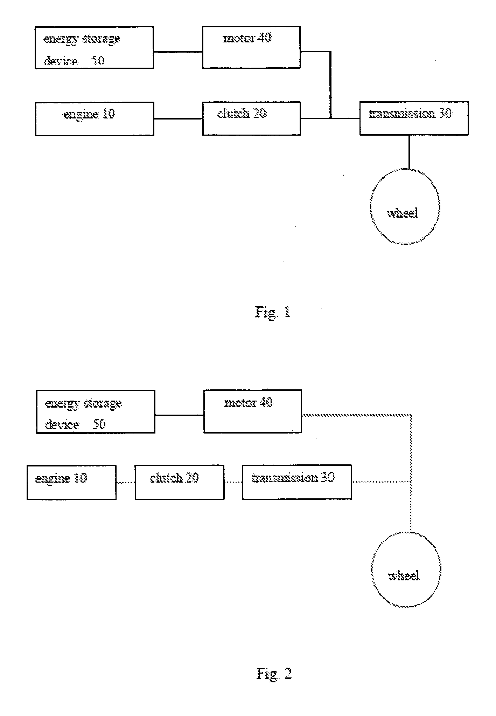

As shown in Figure 2, a hybrid power system according to the present invention comprises an engine 10, a clutch 20, a transmission 30, an electric motor 40 and an energy storage device 50. The electric motor 40 is connected with the energy storage device 50 and the engine 10 is connected with the input shaft of the transmission 30 via the clutch 20. The output shaft of the transmission 30 is connected with the output shaft of the motor 40 to output the power together to a user (such as a wheel) thereby avoiding interruption when shifting up or shifting down the transmission ratio because the common output shaft (connected to the output shaft of the motor 40 and the output shaft of the transmission 30) can continuously provide power to the user because it is continuously driven by the output shaft of the motor 40 even during shifting up/shifting down the transmission ratio of the transmission 30. Accordingly, power continuity of the hybrid power system can be ensured. Preferably the hybrid power system according to the present invention is used in automotives, but the invention is not limited thereto. Therefore, the hybrid power system according to the present invention may provide mechanical power by the common output shaft to any kind of a user that is adapted to consume said mechanical power.

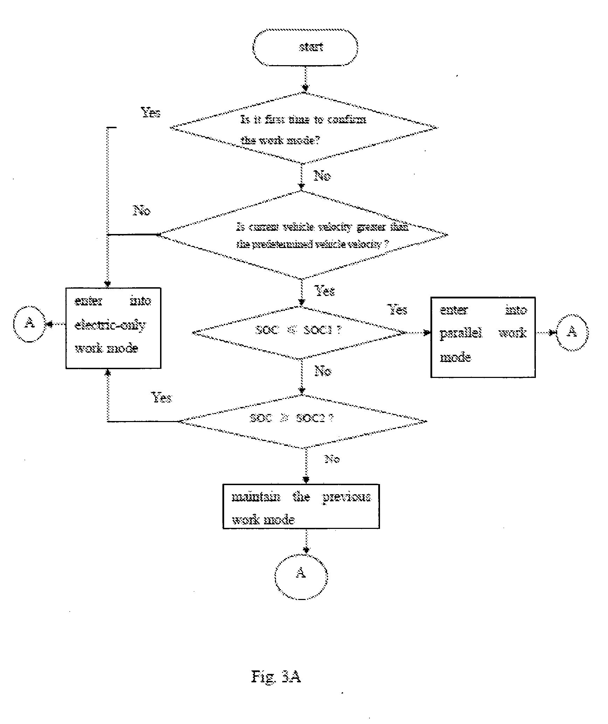

According to a further aspect of the present invention, a method of controlling the hybrid power system is disclosed. The method comprises confirming the work mode of the hybrid power system and assigning the amount of power in the parallel mode. Figure 3A and Figure 3B are a flow chart illustrating the controlling method according to the present invention; in particular Figure 3A is a flow chart of a preferred embodiment of selecting (confirming) the work mode of the hybrid power system; and Figure 3B is a flow chart of a preferred embodiment of assigning the amount of power to be generated by engine 10 and motor 40 during the parallel mode. The controlling method according to the present invention will be hereinafter described in more detail in connection with Figure 3A and Figure 3B.

The hybrid power system controlling method comprises the following steps: confirming the work mode, the work mode of the hybrid power system is confirmed to be electric-only power mode or parallel mode according to current vehicle velocity and the electricity quantity of the energy storage 50; assigning the power, in the electric-only power mode, the output power of the motor 40 is confirmed by the demand power, the output power of the engine 10 is 0; in the parallel mode, the output power of the engine 10 and the motor 40 is assigned according to the rotational speed of the engine 10.

Furthermore, the process of confirming the work mode comprises the following steps: judging whether or not it is the first time to confirm the work mode; if yes, the work mode is configured to be the electric-only mode; if not, comparing current vehicle velocity and the predetermined vehicle velocity; if the current vehicle velocity is lower than the predetermined vehicle velocity V1, the work mode is configured to be the electric-only mode; if the current vehicle velocity is greater than the predetermined vehicle velocity V1, the work mode is configured to be the electric-only mode or the parallel mode according to the electric quantity SOC of the energy storage device 50. The predetermined vehicle velocity V1 is the velocity when the engine works in the lowest rotational speed.

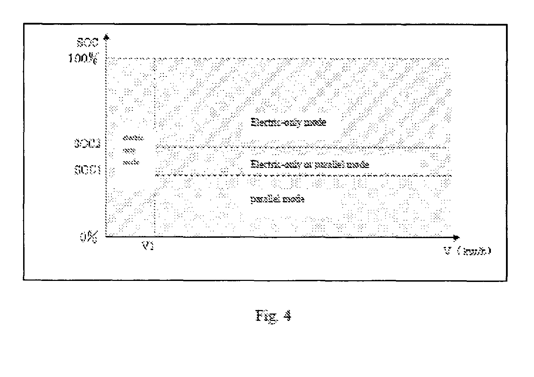

Figure 4 shows the relation of the work mode with the current vehicle velocity and SOC of the hybrid power system (energy storage device 50). When current vehicle velocity V is lower than the predetermined vehicle velocity V1, the engine 10 would have to work on a rotational speed which is lower than the minimum rotational speed, so the engine 10 cannot properly work under such conditions and therefore only the motor 40 works and contributes power to a user, and the work mode is the electric-only mode. When the current vehicle velocity V is equal to or greater than the predetermined vehicle velocity V1, the energy of the energy storage device 50 should be further considered in order to select the work mode of the hybrid power system.

Generally, the energy storage device 50 has the lower discharge limit SOC1 (lower predetermined state of charge value) and charge upper limit SOC2 (upper predetermined state of charge value), and $0\% < SOC1 < SOC2 < 100\%$; when the current vehicle velocity V is greater than the predetermined vehicle velocity V1, the work mode of the hybrid power system is configured by comparing the electricity quantity SOC (current state of charge value) with the predetermined SOC1 and SOC2 of the energy storage device 50. When $SOC \leq SOC1$, the work mode is set to be the parallel mode; when $SOC1 < SOC < SOC2$, the work mode is set to be the previous mode; when $SOC \geq SOC2$, the work mode is set to be the electric-only mode. The discharge lower limit SOC1 is set in relation to the performance of the energy storage device 50, such as 10%; the charge upper limit SOC2 may be 60% to avoid the excessive consumption of the fuel when the engine 10 was used to generate the power too much. The electricity quantity of the energy storage device 50 is used for driving in the work mode selecting process as described above thereby reducing the fuel consumption of the engine 10.

The decelerator has a fixed reduction ratio, V1 corresponds to a rotational speed of the engine, this rotational speed is preferred to be the lowest rotational speed in the high efficiency zone of the engine. If the rotational speed is less, the fuel efficiency of the engine will fall. In system of the present preferred embodiment, the rotational speed is preferred to be 1500 rpm, and V1 is preferred to be 45 km/h.

When the engine 10 is driven with a certain rotational speed, there results a certain optimal output power for every rotational speed to meet the optimal output efficiency, i.e. to achieve the highest possible degree of efficiency. This optimal output power may vary according to the amount of the rotational speed. In case the output power of the engine 10 is different to the optimal output power of the engine 10 for a given rotational speed, the fuel cannot be fully burned, which will lose some fuel and the environment will be polluted by exhausting gas. To reduce the energy waste and protect the environment, the output power of the engine 10 should be considered first when assigning the power in the parallel mode. The detailed assigning process of the controlling method of present invention in the parallel mode comprises the following steps: configuring the total power demand P by the maximum output power P_max of the hybrid power system and a current accelerator pedal depth Acc which is driven by a user, using the formula $P = P\_max \times Acc$ to calculate; configuring the optimal output power Pe_opt of the engine 10 in current rotational speed by the rotational speed of the (crankshaft of the) engine 10; configuring the output power of the engine 10 to be the optimal output power Pe_opt, configuring the output power of the motor 40 to be the difference of the demanded power P and the optimal output power Pe_opt. When the difference of P and Pe_opt is a positive number, the motor 40 is in a driving state, i.e. the motor 40 supplied meachnical energy to the user or contributes (together with the engine 10) to the supply of energy to the user; when the difference of P and Pe_opt is a negative number, the motor 40 is in a generating power state. When the output power of the engine 10 and the motor 40 are assign according to the method of the present invention, the engine 10 may be driven with the highest possible work efficiency during the whole operation of the hybrid power system.

It shall be understood, that the process of assigning power in the parallel mode is preferably repeated as many times as the total power demand P (which is required from a user) changes. Preferably, the method according to the present invention is implemented during the whole time of operation of the hybrid power system.

The process of configuring the optimal output power of the engine comprises the following steps: configuring (determining) the rotational speed of the engine 10; searching the optimal output power which is corresponding to said rotational speed in the rotational speed-power contrast table of the engine 10. The rotational speed-power contrast table generally is stored in a controller of the hybrid power system (or of the engine 10).

The rotational speed of the engine 10 can be obtained by following method: (1) Calculating the rotational speed Ve by the reduction ratio i of wheel rotational speed of a current gear and that of the engine 10, and the wheel radius r, the formula is

$$Ve = \frac{v}{2\pi r \times i} ; \quad (2)$$

Determining the rotational speed of the engine 10 by using a detecting sensor of the rotational speed in the engine 10. Certainly, it is not only possible to utilize the above two methods to configure (determine) the rotational speed of the engine 10, other common method in this art may be used.

A shifting process of the hybrid power system comprises the following steps: decreasing the input power of the engine 10 and increase the output power of the motor 40 such to maintain the sum of output power of the engine 10 and the motor 40 unchanged; disengaging the clutch 20 and shifting (up or down) the transmission 30 when the output power of the engine 10 is decreased to 0; after the shifting, the rotational speed of the engine 10 should be readjusted according to the new gear, and the clutch 20 should be engaged; after engaging the clutch 20, configuring the output power of the engine 10 to change gradually to be the optimal output power which corresponding to the rotational speed of the engine 10.

In above shifting process, through increasing the output power of the motor 40 when cutting the power output of the engine 10, the total output power of the hybrid power system remains constantly, which ensures the power continuity of the whole power system.

The steps of configuring the optimal output power of the engine 10 in above shifting process is the same as that of assigning the power.

## Claims

1. A method for operating an hybrid power system comprising

   an engine (10);
   a clutch (20);
   a transmission (30) having an input shaft and an output shaft and different transmission ratios, wherein the engine (10) is directly connected to the input shaft of the transmission (30) via the clutch (20);
   an energy storage device (50);
   an electric motor (40) having an output shaft, the motor (40) being connected to the energy storage device (50); and
   wherein the output shaft of the transmission (30) is directly coupled with the output shaft of the motor (40) using a spline connection to provide a coupled power output to the common output shaft to avoid interruption when shifting up or shifting down the transmission ratio,
   the method further comprising the steps of:

      transferring the power supplied by the output shaft of the transmission (30) and the power supplied by the output shaft of the motor (40) to a common output shaft, and transferring the output power of the common output shaft to the directly coupled wheel of a vehicle,
      setting the work mode of the hybrid power system to be electric-only power mode or a parallel mode in which both, power from the electric motor (40) and power from the engine (10) contribute to the power which is output to the wheel of the vehicle based on a current vehicle velocity (V) and an electric quantity (SOC) of the energy storage device (50);
wherein, if the work mode is set to the electric-only power mode, then assigning a power level such that an output power of the motor (40) is based on the demanded power (P), and wherein the output power of the engine (10) is set to be zero; and
**characterized in that**
if the work mode is set to the parallel mode, then assigning a power level by a controller which is adapted to control both, the engine (10) and the electric motor (40), such that an optimal output power of the engine (10) to achieve the highest possible degree of efficiency and an output power of the motor (40) are both assigned based on a rotational speed of the crankshaft of the engine (10) and this process of assigning power of the engine (10) and the electric motor (40) is repeated as many times as the total power demand (P) which is required from a user changes.

2. The method according to claim 1, wherein in the parallel mode, the step of assigning power includes:

determining a power demand in relation to a maximum output power of the hybrid power system;
configuring the engine (10) to output an optimal power with the highest degree of efficiency based on the rotational speed of the crankshaft of the engine (10);
controlling an output power of the engine (10) to be the optimal output power; and
controlling the output power of the motor (40) to be the difference between the demanded power and the optimal output power of the engine (10).

3. The method of claim 2, wherein the step of determining a power demand in relation to a maximum output power of the hybrid power system comprises:
configuring a power demand based on a maximum output power of the hybrid power system and a current depth of an accelerator pedal operated by a user.

4. The method according to one of claims 2 and 3, wherein the step of configuring the engine (10) to output the optimal power includes the steps of:

determining the rotational speed of the engine (10); and
determining an optimal output power of the engine (10) that corresponds to the rotational speed of the engine (10) according to a rotational speed-power contrast table of the engine (10).

5. The method according to one of the preceding claims, wherein the step of setting the work mode comprises the steps of:

transferring the output power supplied by the output shaft of the transmission (30) and the power supplied by the output shaft of the motor (40) to a vehicle; and
determining if the work mode is set for the first time;
wherein, if the work mode is being set for the first time, then the work mode is set to the electric-only mode; and
wherein, if the work mode is not being set for the first time, then compare a current vehicle velocity (V) with a predetermined vehicle velocity (V1); and
wherein, if the current vehicle velocity (V) is less than the predetermined vehicle velocity (V1), then the work mode is set to the electric-only mode; and
wherein, if the current vehicle velocity (V) is equal to or greater than the predetermined vehicle velocity (V1), then the work mode is set to the electric-only mode or the parallel mode according to a state of charge (SOC) value of the energy storage device (50).

6. The method of claim 5, wherein the predetermined vehicle velocity (V1) is a velocity corresponding to a mode of operation in which the crankshaft of the engine (10) works in a lowest possible rotational speed different from zero.

7. The method according to one of claims 5 and 6, wherein, if the current vehicle velocity (V) is greater than the predetermined vehicle velocity (V1), then:

the work mode is set to the parallel mode if $SOC \leq SOC1$;
the work mode is set to the electric-only mode if $SOC \geq SOC2$; and
the work mode is set to a previously set mode if $SOC1 < SOC < SOC2$,
wherein SOC represents the current state of charge value of the energy storage device (50), SOC1 represents a predetermined lower state of charge value and SOC2 represents a predetermined upper state of charge value complying with the condition: $0\% < SOC1 < SOC2 < 100\%$.

8. The method of claim 7, wherein the predetermined lower state of charge value (SOC1) is set to range between 5% and 20%, and the predetermined upper state of charge value is set to range between 40% and 80%, and the predetermined vehicle velocity (V1) is set to range between 30 and 60 km/h.

**9.** The method of claim 8, wherein the predetermined lower state of charge value (SOC1) is set to range between 8% and 12%, and the predetermined upper state of charge value is set to range between 55% and 65%, and the predetermined vehicle velocity (V1) is set to range between 40 and 50 km/h.

**10.** The method according to one of the preceding claims, wherein shifting up or shifting down the transmission ratio comprises the steps of:

decreasing an input power of the engine (10) and increasing an output power of the motor (40) such that a sum of the output power of the engine and the motor remains unchanged;
disengaging the clutch (20) and shifting the transmission (30) to a new gear level while the output power of the engine (10) is reduced to zero;
after shifting the transmission (30), adjusting the rotational speed of the engine (10) based on the new gear level, and engaging the clutch (20); and
after engaging the clutch (20), and configuring the engine (10) to output an optimal power with the highest degree of efficiency based on the rotational speed of the crankshaft of the engine (10).

**11.** A computer readable medium having a computer program stored thereon of operating a hybrid power system comprising an engine (10); a clutch (20); a transmission (30) having an input shaft and an output shaft and different transmission ratios, wherein the engine (10) is directly connected to the input shaft of the transmission (30) via the clutch (20); an energy storage device (50); an electric motor (40) having an output shaft, the motor (40) being connected to the energy storage device (50); and wherein the output shaft of the transmission (30) is directly coupled with the output shaft of the motor (40) using a spline connection to provide a coupled power output to the common output shaft to avoid interruption when shifting up or shifting down the transmission ratio, wherein the computer readable medium enables a computer, after the program is loaded into the computer, to execute a method according to one of claims 1-10.

**Patentansprüche**

**1.** Verfahren zum Betreiben eines Hybridantriebssystems, aufweisend
einen Motor (10);
eine Kupplung (20);
ein Getriebe (30), das eine Eingangswelle und eine Ausgangswelle und unterschiedliche Übersetzungsverhältnisse aufweist, wobei der Motor (10) über die Kupplung (20) direkt mit der Eingangswelle des Getriebes (30) verbunden ist;
eine Energiespeichervorrichtung (50);
einen elektrischen Motor (40), der eine Ausgangswelle aufweist, wobei der Motor (40) mit der Energiespeichervorrichtung (50) verbunden ist; und
wobei die Ausgangswelle des Getriebes (30) mittels einer Keilwellenverbindung direkt mit der Ausgangswelle des Motors (40) gekoppelt ist, um eine gekoppelte Leistungsausgabe zur gemeinsamen Ausgangswelle zu liefern, um eine Unterbrechung zu vermeiden, wenn das Übersetzungsverhältnis hinauf- oder heruntergeschaltet wird,
wobei das Verfahren weiterhin die folgenden Schritte aufweist:

Übertragen der von der Ausgangswelle des Getriebes (30) gelieferten Leistung und der von der Ausgangswelle des Motors (40) gelieferten Leistung zu einer gemeinsamen Ausgangswelle, und Übertragen der Ausgangsleistung der gemeinsamen Ausgangswelle zu dem direkt gekoppelten Rad eines Fahrzeugs,
Einstellen des Arbeitsmodus des Hybridantriebssystems auf einen rein elektrischen Antriebsmodus oder einen Parallelmodus, wobei sowohl die Leistung vom elektrischen Motor (40) als auch die Leistung vom Motor (10) zur Leistung beitragen, die an das Rad des Fahrzeugs ausgegeben wird, basierend auf einer aktuellen Fahrzeuggeschwindigkeit (V) und einer elektrischen Größe (SOC) der Energiespeichervorrichtung (50);
wobei, wenn der Arbeitsmodus auf den rein elektrischen Antriebsmodus eingestellt wird, ein Leistungspegel derart zugeordnet wird, dass eine Ausgangsleistung des Motors (40) auf dem Leistungsbedarf (P) basiert, und wobei die Ausgangsleistung des Motors (10) auf null eingestellt wird; und
**dadurch gekennzeichnet, dass**
wenn der Arbeitsmodus auf den Parallelmodus eingestellt wird, ein Leistungspegel durch eine Steuerung, die angepasst ist, sowohl den Motor (10) als auch den elektrischen Motor (40) zu steuern, derart zugeordnet wird, dass sowohl eine optimale Ausgangsleistung des Motors (10) zum Erzielen des höchstmöglichen Wirkungsgrads als auch eine Ausgangsleistung des Motors (40) basierend auf einer Drehgeschwindigkeit der Kurbelwelle des Motors (10) zugeordnet werden und dieser Prozess des Zuordnens von Leistung des Motors (10) und des elektrischen Motors (40) so oft wiederholt wird wie sich der Gesamtleistungsbedarf (P), der von einem Benutzer benötigt wird, ändert.

**2.** Verfahren nach Anspruch 1, wobei im Parallelmodus der Schritt des Zuordnens von Leistung aufweist:

Bestimmen eines Leistungsbedarfs in Bezug auf eine maximale Ausgangsleistung des Hybridantriebssystems;

Konfigurieren des Motors (10) zum Ausgeben einer optimalen Leistung mit dem höchsten Wirkungsgrad basierend auf der Drehgeschwindigkeit der Kurbelwelle des Motors (10);

Steuern eines Ausgangsleistung des Motors (10), so dass sie die optimale Ausgangsleistung ist; und

Steuern der Ausgangsleistung des Motors (40), so dass sie die Differenz zwischen der verlangten Leistung und der optimalen Ausgangsleistung des Motors (10) ist.

3. Verfahren nach Anspruch 2, wobei der Schritt des Bestimmens eines Leistungsbedarfs in Bezug auf eine maximale Ausgangsleistung des Hybridantriebssystems aufweist: Konfigurieren eines Leistungsbedarfs basierend auf einer maximalen Ausgangsleistung des Hybridantriebssystems und einer aktuellen Tiefe eines von einem Benutzer bedienten Gaspedals.

4. Verfahren nach einem der Ansprüche 2 und 3, wobei der Schritt des Konfigurierens des Motors (10) zum Ausgeben der optimalen Leistung die folgenden Schritte aufweist:

Bestimmen der Drehgeschwindigkeit des Motors (10); und

Bestimmen einer optimalen Ausgangsleistung des Motors (10), die der Drehgeschwindigkeit des Motors (10) gemäß einer Kontrasttabelle Drehgeschwindigkeit / Leistung des Motors (10) entspricht.

5. Verfahren nach einem der vorhergehenden Ansprüche, wobei der Schritt des Einstellens des Arbeitsmodus die folgenden Schritte aufweist:

Übertragen der Ausgangsleistung, die von der Ausgangswelle des Getriebes (30) geliefert wird, und der Leistung, die von der Ausgangswelle des Motors (40) geliefert wird, zu einem Fahrzeug; und

Bestimmen, ob der Arbeitsmodus zum ersten Mal eingestellt wird;

wobei, wenn der Arbeitsmodus zum ersten Mal eingestellt wird, der Arbeitsmodus auf den rein elektrischen Modus eingestellt wird; und

wobei, wenn der Arbeitsmodus nicht zum ersten Mal eingestellt wird, eine aktuelle Fahrzeuggeschwindigkeit (V) mit einer vorbestimmten Fahrzeuggeschwindigkeit (V1) verglichen wird; und

wobei, wenn die aktuelle Fahrzeuggeschwindigkeit (V) geringer als die vorbestimmte Fahrzeuggeschwindigkeit (V1) ist, der Arbeitsmodus auf den rein elektrischen Modus eingestellt wird; und

wobei, wenn die aktuelle Fahrzeuggeschwindigkeit (V) gleich der oder größer als die vorbestimmte Fahrzeuggeschwindigkeit (V1) ist, der Arbeitsmodus auf den rein elektrischen Modus oder auf den Parallelmodus gemäß einem Ladezustands (SOC)-Wert der Energiespeichervorrichtung (50) eingestellt wird.

6. Verfahren nach Anspruch 5, wobei die vorbestimmte Fahrzeuggeschwindigkeit (V1) eine Geschwindigkeit ist, die einem Betriebsmodus entspricht, in dem die Kurbelwelle des Motors (10) in einer niedrigstmöglichen Drehgeschwindigkeit anders als null arbeitet.

7. Verfahren nach einem der Ansprüche 5 und 6, wobei, wenn die aktuelle Fahrzeuggeschwindigkeit (V) größer als die vorbestimmte Fahrzeuggeschwindigkeit (V1) ist:

der Arbeitsmodus auf den Parallelmodus eingestellt wird, wenn $SOC \leq SOC1$;

der Arbeitsmodus auf den rein elektrischen Modus eingestellt wird, wenn $SOC \geq SOC2$; und

der Arbeitsmodus auf einen vorher eingestellten Modus eingestellt wird, wenn $SOC1 < SOC < SOC2$,

wobei SOC den aktuellen Ladezustandswert der Energiespeichervorrichtung (50) repräsentiert, SOC1 einen vorbestimmten niedrigeren Ladezustandswert repräsentiert und SOC2 einen vorbestimmten höheren Ladezustandswert, der die Bedingung: $0\% < SOC1 < SOC2 < 100\%$ erfüllt, repräsentiert.

8. Verfahren nach Anspruch 7, wobei der vorbestimmte niedrigere Ladezustandswert (SOC1) auf einen Bereich zwischen 5% und 20% eingestellt ist und der vorbestimmte höhere Ladezustandswert auf einen Bereich zwischen 40% und 80% eingestellt ist und die vorbestimmte Fahrzeuggeschwindigkeit (V1) auf einen Bereich zwischen 30 und 60km/h eingestellt ist.

9. Verfahren nach Anspruch 8, wobei der vorbestimmte niedrigere Ladezustandswert (SOC1) auf einen Bereich zwischen 8% und 12% eingestellt ist und der vorbestimmte höhere Ladezustandswert auf einen Bereich zwischen 55% und 65% eingestellt ist und die vorbestimmte Fahrzeuggeschwindigkeit (V1) auf einen Bereich zwischen 40 und 50 km/h eingestellt ist.

10. Verfahren nach einem der vorhergehenden Ansprüche, wobei das Hinauf- oder Herunterschalten des Übersetzungsverhältnisses die folgenden Schritte aufweist:

Reduzieren einer Eingangsleistung des Motors (10) und Erhöhen einer Ausgangsleistung des Motors (40) derart, dass eine Summe der Ausgangsleistung des Motors und des Motors unverändert bleiben;

Lösen der Kupplung (20) und Schalten des Getriebes (30) auf eine neue Gangstufe, während die Ausgangsleistung des Motors (10) auf null reduziert wird,

nach dem Schalten des Getriebes (30) Einstellen der Drehgeschwindigkeit des Motors (10) basierend auf der neuen Gangstufe und Einrücken der Kupplung (20); und

nach dem Einrücken der Kupplung (20) und Konfigurieren des Motors (10) zum Ausgeben einer optimalen Leistung mit dem höchsten Wirkungsgrad basierend auf der Drehgeschwindigkeit der Kurbelwelle des Motors (10).

11. Computerlesbares Medium, aufweisend ein darauf gespeichertes Computerprogramm zum Betreiben eines Hybridantriebssystems, aufweisend einen Motor (10); eine Kupplung (20); ein Getriebe (30), das eine Eingangswelle und eine Ausgangswelle und unterschiedliche Übersetzungsverhältnisse aufweist, wobei der Motor (10) über die Kupplung (20) direkt mit der Eingangswelle des Getriebes (30) verbunden ist; eine Energiespeichervorrichtung (50); einen elektrischen Motor (40), der eine Ausgangswelle aufweist, wobei der Motor (40) mit der Energiespeichervorrichtung (50) verbunden ist; und wobei die Ausgangswelle des Getriebes (30) mittels einer Keilwellenverbindung direkt mit der Ausgangswelle des Motors (40) gekoppelt ist, um eine gekoppelte Leistungsausgabe zur gemeinsamen Ausgangswelle zu liefern, um eine Unterbrechung zu vermeiden, wenn das Übersetzungsverhältnis hinauf- oder heruntergeschaltet wird, wobei das computerlesbare Medium einem Computer nach dem Laden des Programms in den Computer ermöglicht, ein Verfahren nach einem der Ansprüche 1-10 auszuführen.

## Revendications

1. Procédé pour faire fonctionner un système d'entraînement hybride, comprenant
un moteur (10) ;
un embrayage (20) ;
une transmission (30) ayant un arbre d'entrée et un arbre de sortie et des rapports de transmission différents, le moteur (10) étant directement relié à l'arbre d'entrée de la transmission (30) par l'embrayage (20) ;

un dispositif de stockage d'énergie (50),
un moteur électrique (40) ayant un arbre de sortie, le moteur (40) étant relié au dispositif de stockage d'énergie (50) ; et
dans lequel l'arbre de sortie de la transmission (30) est directement couplé à l'arbre de sortie du moteur (40) au moyen d'un raccord cannelé pour fournir une puissance débitée couplée à l'arbre de sortie commun pour éviter une interruption lors du passage à un rapport de transmission supérieur ou à un rapport de transmission inférieur,
le procédé comprenant en outre les étapes suivantes ;
transférer la puissance fournie par l'arbre de sortie de la transmission (30) et la puissance fournie par l'arbre de sortie du moteur (40) à un arbre de sortie commun, et transférer la puissance de sortie de l'arbre de sortie commun à la roue directement couplée d'un véhicule,
régler le mode de travail du système d'entraînement hybride de manière à être un mode d'entraînement exclusivement électrique ou un mode parallèle dans lequel et la puissance du moteur électrique (40) et la puissance du moteur (10) contribuent à la puissance qui est fournie à la roue du véhicule sur la base d'une vitesse du véhicule actuelle (V) et une grandeur électrique (SOC) du dispositif de stockage d'énergie (50),
dans lequel, si le mode de travail est réglé de manière à être un mode d'entraînement exclusivement électrique, un niveau de puissance est affecté de telle manière qu'une puissance de sortie du moteur (40) soit basée sur la puissance demandée (P), et dans lequel la puissance de sortie du moteur (10) est réglée de manière à être zéro ; et
**caractérisé en ce que**
si le mode de travail est réglé de manière à être le mode parallèle, un niveau de puissance est affecté de telle manière par une commande adaptée pour commander et le moteur (10) et le moteur électrique (40) qu'une puissance de sortie optimale du moteur (10) permettant d'atteindre le plus haut degré d'efficacité possible et une puissance de sortie du moteur (40) soient affectées sur la base d'une vitesse de rotation du vilebrequin du moteur (10), et ce procédé d'affectation de puissance du moteur (10) et du moteur électrique (40) est répété aussi souvent que la demande de puissance (P) totale demandée par un utilisateur change.

2. Procédé selon la revendication 1, dans lequel, en mode parallèle, l'étape d'affectation de puissance comprend :

déterminer une demande de puissance en fonction d'une puissance de sortie maximale du système d'entraînement hybride ;
configurer le moteur (10) de manière qu'il rende une puissance optimale avec le plus haut dégrée d'efficacité sur la base de la vitesse de rotation du vilebrequin du moteur (10) ;

commander une puissance de sortie du moteur (10) de manière qu'elle soit la puissance de sortie optimale, et

commander la puissance de sortie du moteur (40) de manière qu'elle soit la différence entre la puissance demandée et la puissance de sortie optimale du moteur (10).

3. Procédé selon la revendication 2, dans lequel l'étape de détermination d'une demande de puissance en fonction d'une puissance de sortie maximale du système d'entraînement hybride comprend : configurer une demande de puissance sur la base d'une puissance de sortie maximale du système d'entraînement hybride et une profondeur actuelle d'une pédale d'accélérateur actionnée par un utilisateur.

4. Procédé selon l'une des revendications 2 et 3, dans lequel l'étape de configuration du moteur (10) de manière qu'il rende la puissance optimale comprend les étapes suivantes :

  déterminer la vitesse de rotation du moteur (10), et

  déterminer une puissance de sortie optimale du moteur (10) qui correspond à la vitesse de rotation du moteur (10) selon une table de contraste vitesse de rotation / puissance du moteur (10).

5. Procédé selon l'une des revendications précédentes, dans lequel l'étape de réglage du mode de travail comprend les étapes suivantes :

  transférer la puissance de sortie fournie par l'arbre de sortie de la transmission (30) et la puissance fournie par l'arbre de sortie du moteur (40) à un véhicule ; et

  déterminer si le mode de travail est réglé pour la première fois ;

  dans lequel, si le mode de travail est réglé pour la première fois, le mode de travail est réglé de manière à être le mode exclusivement électrique, et

  dans lequel, si le mode de travail n'est pas réglé pour la première fois, une vitesse de véhicule actuelle (V) est comparée à une vitesse de véhicule prédéterminée (V1) ; et

  dans lequel, si la vitesse de véhicule actuelle (V) est inférieure à la vitesse de véhicule prédéterminée (V1), le mode de travail est réglé de manière à être le mode exclusivement électrique, et

  dans lequel, si la vitesse de véhicule actuelle (V) est égale à ou supérieure à la vitesse de véhicule prédéterminée (V1), le mode de travail est réglé de manière à être le mode exclusivement électrique ou le mode parallèle selon une valeur d'état de charge (SOC) du dispositif de stockage d'énergie (50).

6. Procédé selon la revendication 5, dans lequel la vitesse de véhicule prédéterminée (V1) est une vitesse qui correspond à un mode de fonctionnement dans lequel le vilebrequin du moteur (10) fonctionne à une plus faible vitesse de rotation possible différente de zéro.

7. Procédé selon l'une des revendications 5 et 6, dans lequel, si la vitesse de véhicule actuelle (V) est supérieure à la vitesse de véhicule prédéterminée (V1) :

  le mode de travail est réglé de manière à être le mode parallèle si SOC ≤ SOC1;

  le mode de travail est réglé de manière à être le mode exclusivement électrique si SOC ≥ SOC2 ; et

  le mode de travail est réglé de manière à être un mode de réglage préalablement réglé si SOC1 < SOC < SOC2,

  SOC représentant la valeur d'état de charge actuelle du dispositif de stockage d'énergie (50), SOC1 représentant une valeur d'état de charge inférieure prédéterminée, et SOC2 représentant une valeur d'état de charge supérieure prédéterminée satisfaisant la condition : 0% < SOC1 < SOC2 < 100%.

8. Procédé selon la revendication 7, dans lequel la valeur d'état de charge inférieure prédéterminée (SOC1) est réglée de manière à être dans la plage entre 5% et 20%, et la valeur d'état de charge supérieure prédéterminée est réglée de manière à être dans la plage entre 40% et 80%, et la vitesse de véhicule prédéterminée (V1) est réglée de manière à être dans la plage entre 30 et 60 km/h.

9. Procédé selon la revendication 8, dans lequel la valeur d'état de charge inférieure prédéterminée (SOC1) est réglée de manière à être dans la plage entre 8% et 12%, et la valeur d'état de charge supérieure prédéterminée est réglée de manière à être dans la plage entre 55% et 65%, et la vitesse de véhicule prédéterminée (V1) est réglée de manière à être dans la plage entre 40 et 50 km/h.

10. Procédé selon l'une des revendications précédentes, dans lequel le passage à un rapport de transmission supérieur ou à un rapport de transmission inférieur comprend les étapes suivantes :

  diminuer une puissance d'entrée du moteur (10) et augmenter une puissance de sortie du moteur (40) de telle manière qu'une somme de la puissance de sortie du moteur et du moteur reste inchangée ;

débrayer l'embrayage (20) et faire passer la transmission (30) à un rapport de vitesses nouveau alors que la puissance de sortie du moteur (10) est réduite à zéro ;

après le passage de la transmission (30), ajuster la vitesse de rotation du moteur (10) sur la base du rapport de vitesses nouveau, et engager l'embrayage (20) ; et

après l'engagement de l'embrayage (20), et configurer le moteur (10) de manière qu'il rende une puissance optimale avec le plus haut dégrée d'efficacité sur la base de la vitesse de rotation du vilebrequin du moteur (10).

11. Support lisible par ordinateur ayant un programme d'ordinateur stocké sur celui-ci pour faire fonctionner un système d'entraînement hybride comprenant un moteur (10) ; un embrayage (20) ; une transmission (30) ayant un arbre d'entrée et un arbre de sortie et des rapports de transmission différents, le moteur (10) étant directement relié à l'arbre d'entrée de la transmission (30) par l'embrayage (20) ; un dispositif de stockage d'énergie (50) ; un moteur électrique (40) ayant un arbre de sortie, le moteur (40) étant relié au dispositif de stockage d'énergie (50) ; et dans lequel l'arbre de sortie de la transmission (30) est directement couplé à l'arbre de sortie du moteur (40) au moyen d'un raccord cannelé pour fournir une puissance débitée couplée à l'arbre de sortie commun pour éviter une interruption lors du passage à un rapport de transmission supérieur ou à un rapport de transmission inférieur, le support lisible par ordinateur permettant à un ordinateur d'exécuter un procédé selon l'une des revendications 1-10 après que le programme soit chargé dans l'ordinateur.

energy storage device　50

motor 40

engine 10

clutch 20

transmission 30

wheel

Fig. 1

energy storage device　50

motor 40

engine 10

clutch 20

transmission 30

wheel

Fig. 2

Fig. 3A

Fig. 4

**EP 2 141 056 B1**

## REFERENCES CITED IN THE DESCRIPTION

### Patent documents cited in the description

- CN 200810129196
- US 6428444 B